# EUROPEAN PATENT SPECIFICATION

(11) **EP 3 721 608 B1**
(45) Date of publication and mention of the grant of the patent: **24.09.2025**
(21) Application number: 18705882.1
(22) Date of filing: 14.02.2018
(51) Int. Cl.: H04M 1/02, H04M 1/18, G06F 1/16

(54) **HOUSING STRUCTURE COMPRISING PANEL ELEMENTS FOR AN ELECTRONIC DEVICE**
GEHÄUSESTRUKTUR MIT PANEELELEMENTEN FÜR EINE ELEKTRONISCHE VORRICHTUNG
STRUCTURE DE BOÎTIER COMPRENANT DES ÉLÉMENTS DE PANNEAU POUR UN DISPOSITIF ÉLECTRONIQUE

(43) Date of publication of application: 14.10.2020
(73) Proprietor: HUAWEI TECHNOLOGIES CO., LTD., Shenzhen, Guangdong 518129 (CN)
(72) Inventor: LI, Jue, 16440 Kista (SE); LUO, Guoping, 16440 Kista (SE); ZHANG, Hongxue, 16440 Kista (DE)
(74) Representative: Gill Jennings & Every LLP
(86) International application number: PCT/EP2018/053646
(87) International publication number: WO 2019/158194

(56) References cited:
- EP-A1- 3 279 762
- US-A1- 2012 250 276
- US-A1- 2016 120 057
- US-A1- 2016 227 654

## Description

### TECHNICAL FIELD

The disclosure relates to a housing structure for an electronic device comprising a front panel element and a rear panel element, a side panel element bridging a gap formed between the front panel element and the rear panel element.

### BACKGROUND

The design of an electronic device is a key factor for its success in the marketplace. Possible design choices include the choice of material used for the external housing of the electronic device, which, over the years, has changed from a plastic housing to more high-end housings comprising a combination of metal and glass.

The durability of glass panel is a concern due to several factors, including glass being a brittle material requiring specific treatment such as chemical strengthening, natural weak points at edges, and residual stress created during the glass panel forming process. Nevertheless, there is a need for providing high-end housings which may be provided with separate panels, e.g. made of glass, not only on the front and rear of the housing structure, but also along its sides.

EP3279762 relates to handheld device enclosure. US2016227654 relates to display device. US2016120057 relates to coupling frame and methods for making the same. US2012250276 relates to electronic apparatus.

### SUMMARY

It is an object to provide an improved housing structure suitable for use in an electronic device.

The invention has been defined in the independent claims. Further specific technical features have been defined in the dependent claims.

The housing structure disclosed in this application provides extra stability to the electronic device, as well as support for the panel elements which together form the housing of the electronic device. The individual panel elements are supported by the support frame in a way which makes them less sensitive to damage. Furthermore, the support frame allows all sides of the housing structure, and hence the electronic device, to be covered by panel elements such that an attractive, cohesive design may be achieved.

The front panel element, the rear panel element, and the side panel elements are made of glass, facilitating a contemporary design for the housing structure and in addition allowing an easier antenna design as no metal structures block incoming or outgoing radio waves.

The flanges of the end frame member comprise at least a plate-shaped section which extends in parallel with the center frame member and in a direction away from the center frame member such that the web and flanges form a groove, the side panel element being arranged in the groove, surrounded at two sides by the flanges, such that the side panel elements are well secured to the support frame and partially surrounded, and protected, by the same. The flanges of the end frame member protrude past an outer face of the side panel element, arranged in the groove, in a direction away from the center frame member, allowing shock, e.g. caused by dropping the electronic device on the floor, to be at least partially absorbed and hence reducing the risk of the panel elements being damaged.

Alternatively, the flanges of the end frame member comprise at least a curved section, attached to the web of the end frame member, the flanges of the end frame member extending in a direction towards the center frame member, providing extra support and reinforcement to the edges of the panel elements.

In a possible implementation, the support frame comprises a plurality of end frame members, the end frame members being arranged at opposing edges of the center frame member, the center frame member extending continuously between the end frame members, The housing structure disclosed in this application provides a simple and symmetric structure which also gives extra support to the electronic device into which the support frame is to be fitted.

In a possible implementation, the flange of the end frame member has an inner face and an outer face, the front and rear panel elements being attached to the outer faces of opposing flanges of the end frame member, providing a large surface for the panel elements to be securely attached to.

In a possible implementation, at least one of the front panel element or the rear panel element has curved side sections, and an edge of the curved side section is attached to the outer face of the flange of the end frame member, allowing the flanges to protrude past the panel elements, towards the exterior, such that they can absorb shock, e.g., caused by dropping the electronic device on the floor.

In a possible implementation, at least one of the front panel element or the rear panel element has curved side sections, and a rear face of the curved side section is attached to the outer face of the flange of the end frame member, providing extra support and reinforcement to the curved side sections of the panel elements.

In a possible implementation, at least one of the front panel element or the rear panel element is plate-shaped, and a rear face of the front panel element or the rear panel element is attached to the outer face of the flange of the end frame member, providing extra support and reinforcement to the flat side sections of the panel elements.

In a possible implementation, the support frame is made of metal, allowing the support frame to be both sufficiently rigid and lightweight.

In a possible implementation, the front, the rear, and the side panel elements are attached to the support frame by means of adhesive, facilitating simple and cost-effective assembly of the housing structure.

According to a second aspect, there is provided an electronic device comprising a housing structure according to the above. The housing structure provides extra stability to the electronic device, as well as support for the panel elements which together form a hollow shell. The individual panel elements are supported by the support frame in a way which makes them less sensitive to damage. Furthermore, the support frame allows all sides of the housing structure, and hence the electronic device, to be covered by panel elements such that an attractive design may be achieved.

This and other aspects will be apparent from and the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 shows a perspective view of an electronic device in accordance with one embodiment of the present invention;
Fig. 2 shows a perspective view of an electronic device in accordance with another embodiment of the present invention;
Fig. 3 shows a cross-sectional part view of a housing structure in accordance with one embodiment of the present invention;
Fig. 4 shows a cross-sectional part view of a housing structure in accordance with another embodiment of the present invention;
Fig. 5 shows a further cross-sectional part view of the embodiment shown in Fig. 3;
Fig. 6 shows a further cross-sectional part view of the embodiment shown in Figs. 3 and 5;
Fig. 7 shows a further cross-sectional part view of the embodiment shown in Fig. 4;
Fig. 8 shows a further cross-sectional part view of the embodiment shown in Figs. 4 and 7;
Fig. 9 shows a cross-sectional part view of a housing structure in accordance with another embodiment of the present invention; and
Fig. 10 shows a further cross-sectional part view of the embodiment shown in Fig. 9.

### DETAILED DESCRIPTION

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

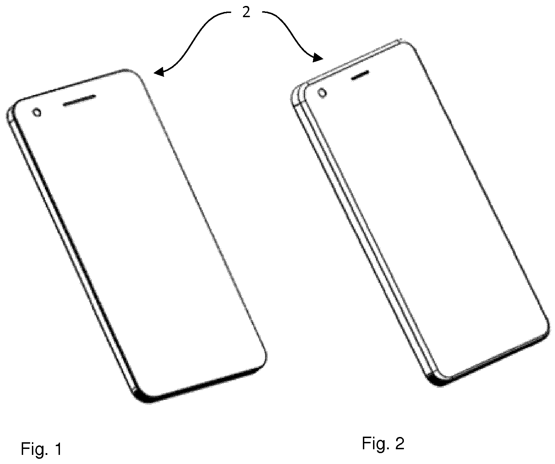

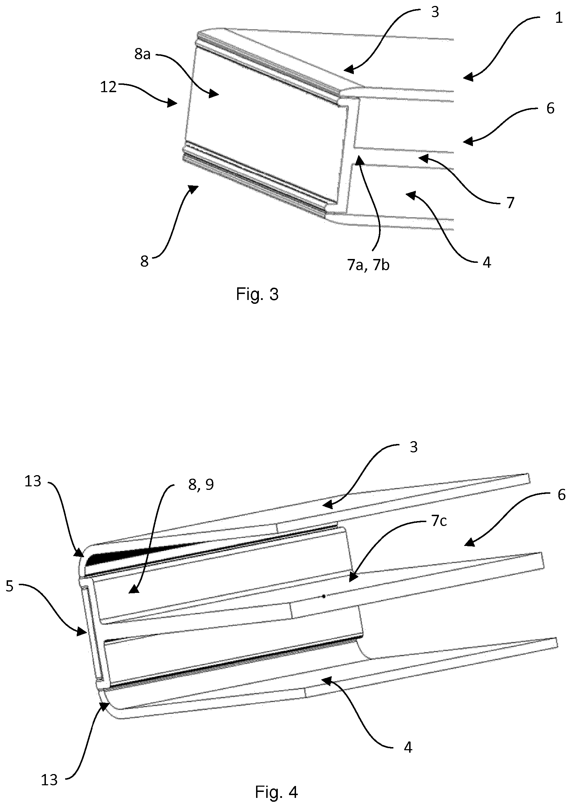

As seen in Figs. 1 and 2, electronic devices may have differently designed front panel elements 3 and rear panel elements 4. Fig. 1 shows a so called 2D/2,5D panel element, and Fig. 2 shows a 3D panel element. 2D refers to the edge of the glass panel element being straight, 2.5D refers to the edge having a slight curvature, and 3D refers to the edge having a larger curvature. 2D is shown more clearly in Fig. 3, and 3D is shown more clearly in Fig. 4.

The electronic device 2, regardless of the design of the front panel element 3 and rear panel element 4, comprises a housing structure 1 within which further components are arranged, such as the display, battery, circuit board, etc. The housing structure 1 comprises the above-mentioned front panel element 3 and rear panel element 4, as well as one or several side panel elements 5. The side panel element 5 bridges the gap formed between the front panel element 3 and the rear panel element 4, the main planes of which extend essentially in parallel. The main plane of the side panel element(s) extend substantially perpendicular to the main planes of the front 3 and rear 4 panel elements. The front 3, rear 4, and side 5 panel element(s) together form a hollow shell. The space enclosed by the hollow shell is considered the interior of the housing structure and electronic device, while the space which is not enclosed by the hollow shell is considered the exterior.

The front panel element 3, the rear panel element 4, and the side panel element(s) 5 are preferably all made of glass. The glass may be single-layer or multi-layer, and it may be strengthened by means of a chemical strengthening process or reinforced by means of lamination. Furthermore, the thickness of the glass panel elements can be varied such that, e.g., the side panel elements are made of thicker, and more durable, glass.

A support frame 6, which supports the front panel element 3, rear panel element 4, and side 5 panel element(s) is arranged, at least partly, within this hollow shell. The support frame comprises a center frame member 7 which extends in between, and substantially in parallel with, the front panel element 3 and rear panel element 4. The center frame member 7 may be a solid plate, a recessed plate, one or several, solid or recessed, beams, or have any other suitable design which extends from one side of the electronic device to the other. Hence, the center frame member 7 has essentially the same width as the inner faces of the front panel element 3 and rear panel element 4.

The support frame 6 may be made of metal, plastic, or glass. The front panel element 3, the rear panel element 4, and the side 5 panel element(s) may be attached to the support frame 6 by means of adhesive, either permanently or removably. In one embodiment, the front panel element 3 and rear panel element 4 are removably attached to the support frame 6 by means of, e.g., reworkable glue, while the side panel element(s) 5 is/are permanently attached to the support frame 6 by means of, e.g., a permanent adhesive which provides additional strength to the side panel element(s). Any other configuration is of course also possible.

The support frame 6 may extend within the electronic device such that it is not in contact with any other components than the panel elements 3. The support frame 6 may also be in contact with, but not support, one or several electronic components arranged within the hollow shell formed by the surrounding panel elements such as the above-mentioned display, battery, circuit boards, etc. Additionally, the support frame 6 may function as a support for the above-mentioned one or several electronic components arranged within the hollow shell.

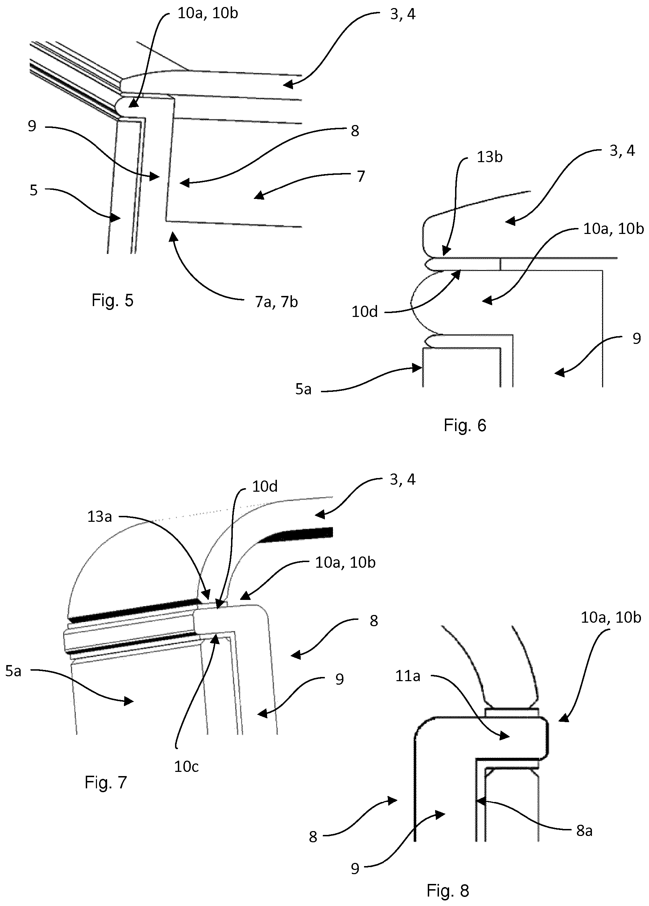

The edge 7a of the center frame member 7 is provided with an end frame member 8, to which the front panel element 3, rear panel element 4, and side 5 panel element(s) are attached. The support frame 6 may be provided with several end frame members 8, one or several per center frame member edge 7a. One end frame member 8 may be arranged at each opposing edge 7a, 7b of the center frame member 7, the center frame member 7 extending continuously between the two end frame members 8. The support frame 6 has at least the same width as the inner faces of the front 3 and rear 4 panel elements, and it may be wider as will be discussed farther below and as is shown in Figs. 6 and 8.

In an embodiment, the end frame member 8 comprises a plate which extends perpendicular to the main plane 7c of the center frame member 7, i.e. perpendicular to the main planes of the front panel element 3 and rear panel element 4, such that the support frame 6 has an I-shaped cross-section. The front panel element 3 and rear panel element 4 panel are attached to the opposing edges of each end frame member 8, and the side panel element(s) 5 is/are attached to the outer face 8a of the end frame member 8, the outer face 8a extending between the opposing edges of the end frame member and facing towards the exterior.

Figs. 3 and 4 show further embodiments of the present disclosure, wherein the end frame member 8 comprises a web 9 and two flanges 10a, 10b (see also Fig.5 to 7). The web 9 of the end frame member 8 extends perpendicular to the main plane 7c of the center frame member 7, and the flanges extend in parallel with the center frame member 7.

The edge 7a, 7b of the center frame member 7 is attached to the web 9 of the end frame member 8, preferably at the center of the web 9 such that the support frame 6 is symmetrical. The flanges 10a, 10b of the end frame member 8 comprise at least a plate-shaped section 11a which extends in parallel with the center frame member 7 and in a direction away from the center frame member 7, i.e. towards the exterior, such that the web 9 and flanges 10a, 10b together form a groove 12 having a U-shaped cross-section.

The front panel element 3 is attached to the flange 10a of the end frame member 8, and the rear panel element 4 is attached to the opposing flange 10b of the same end frame member 8. One or several side panel elements 5 are attached to the web 9 of the end frame member 8, i.e. the side panel element(s) 5 is/are arranged within the groove 12 such that the side panel element(s) is/are surrounded at two sides by the flanges 10a, 10b.

In a first implementation of the claimed invention, the flanges 10a, 10b of the end frame member 8 protrude past the outer face 5a of the side panel element 5, which is arranged in the groove 12, in a direction away from the center frame member 7, i.e. the flanges may protrude past the side panel element surface which is directed towards the exterior, such that the flanges 10a, 10b function as protective elements. This is shown more clearly in Figs. 6 and 8. The flanges 10a, 10b can, e.g., absorb shock caused by dropping the electronic device 2 on the floor, hence reducing the risk that the panel elements are damaged.

The flanges 10a, 10b of the end frame member 8 have an inner face 10c and an outer face 10d, the inner face 10c being directed towards the opposite flange and the outer face 10d being directed towards the exterior. The front 3 and rear 4 panel elements are attached to the outer faces 10d of opposing flanges 10a, 10b of the end frame member 8.

As shown in Figs. 3, 5, and 6, at least one of the front panel element 3 or the rear panel element 4 may be substantially plate-shaped, and the rear face 13b of the panel element 3, 4 is attached to the outer face 10d of the flange 10a, 10b of the end frame member 8.

As shown in Figs. 4, 7, and 8, at least one of the front panel element 3 or the rear panel element 4 may have curved side sections 13, and the edge 13a of the curved side section 13 is attached to the outer face 10d of the flange 10a, 10b of the end frame member 8.

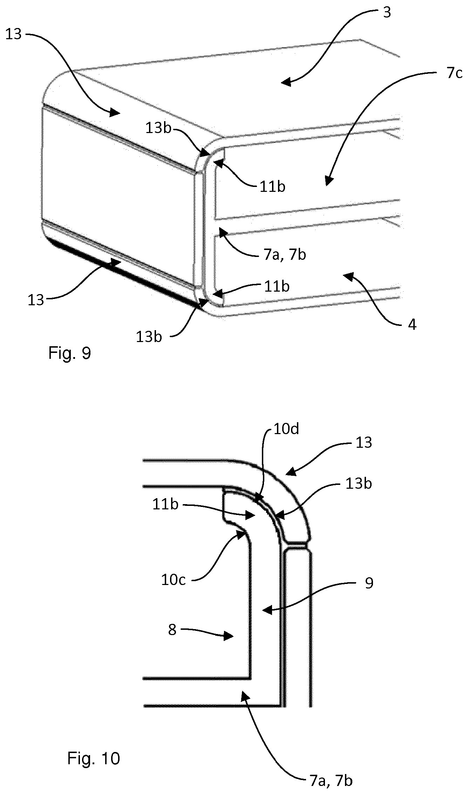

Figs. 9 and 10 show a second implementation of the claimed invention, wherein the flanges 10a, 10b of the end frame member 8 comprise at least a curved section 11b which is attached to the web 9 of the end frame member 8. The curved section 11b of the flanges 10a, 10b extends at least partially in a direction towards the center frame member 7, i.e. towards the interior of the housing structure/electronic device which is the opposite to the embodiments shown in Figs. 3 to 8.

The front panel element 3 is attached to the flange 10a of the end frame member 8, and the rear panel element 4 is attached to the opposing flange 10b of the same end frame member 8. One or several side panel elements 5 are attached to the web 9 of the end frame member 8. The flange 10a, 10b of the end frame member 8 has an inner face 10c and an outer face 10d, and the front 3 and rear 4 panel elements are attached to the outer faces 10d of opposing flanges 10a, 10b of the end frame member 8. At least one of the front panel element 3 or the rear panel element 4 has curved side sections 13, and the rear face 13b of the curved side section 13 is attached to the outer face 10d of the flange 10a, 10b of the end frame member 8, more specifically to the outer face of the curved section 11b. The curved section 11b of the flanges 10a, 10b functions as an additional, inner support which strengthens the housing structure and reduces the risk of the panel elements being damaged if, e.g., dropping the electronic device 2 on the floor.

The various aspects and implementations has been described in conjunction with various embodiments herein.

The scope of protection shall be defined by the appended claims.

## Claims

1. A housing structure (1) for an electronic device (2) comprising:
a front panel element (3) and a rear panel element (4),
a side panel element (5) bridging a gap formed between the front panel element (3) and the rear panel element (4),
a support frame (6) supporting the front panel element (3), rear panel element (4), and side panel element (5), the support frame (6) comprising:
a center frame member (7) extending in between the front panel element (3) and rear panel element (4),
an end frame member (8) arranged at an edge (7a) of the center frame member (7),
wherein the front panel element (3), rear panel element (4), and side panel element (5) are attached to the end frame member (8);
wherein the front panel element (3), rear panel element (4), and side panel element (5) are made of glass;
wherein the end frame member (8) comprises a web (9) and two flanges (10a, 10b), the web (9) of the end frame member (8) extending perpendicular to a main plane (7c) of the center frame member (7) and the edge (7a, 7b) of the center frame member (7) being attached to the web (9) of the end frame member (8),
the front panel element (3) and the rear panel element (4) being attached to opposing flanges (10a, 10b) of the end frame member (8), the side panel element (5) being attached to the web (9) of the end frame member (8);
wherein the flanges (10a, 10b) of the end frame member (8) comprise at least a plate-shaped section (11a) which extends in parallel with the center frame member (7) and in a direction away from the center frame member (7) such that the web (9) and flanges (10a, 10b) form a groove (12), the side panel element (5) being arranged in the groove (12), surrounded at two sides by the flanges (10a, 10b); wherein the flanges (10a, 10b) of the end frame member (8) protrude past an outer face (5a) of the side panel element (5), arranged in the groove (12), in a direction away from the center frame member (7);
or
wherein the flanges (10a, 10b) of the end frame member (8) comprise at least a curved section (11b), attached to the web (9) of the end frame member (8), the flanges (10a, 10b) of the end frame member (8) extending in a direction towards the center frame member (7).

2. The housing structure (1) according to claim 1, wherein the support frame (6) comprises a plurality of end frame members (8), the end frame members (8) being arranged at opposing edges (7a, 7b) of the center frame member (7), the center frame member (7) extending continuously between the end frame members (8).

3. The housing structure (1) according to claim 1 or 2, wherein the flange (10a, 10b) of the end frame member (8) has an inner face (10c) and an outer face (10d), the front panel element (3) and rear panel element (4) being attached to the outer faces (10d) of opposing flanges (10a, 10b) of the end frame member (8).

4. The housing structure (1) according to claim 3, wherein at least one of the front panel element (3) or the rear panel element (4) has curved side sections (13), and an edge (13a) of the curved side section (13) is attached to the outer face (10d) of the flange (10a, 10b) of the end frame member (8).

5. The housing structure (1) according to claim 3, wherein at least one of the front panel element (3) or the rear panel element (4) has curved side sections (13), and a rear face (13b) of the curved side section (13) is attached to the outer face (10d) of the flange (10a, 10b) of the end frame member (8).

6. The housing structure (1) according to claim 3, wherein at least one of the front panel element (3) or the rear panel element (4) is plate-shaped, and a rear face (13b) of the front panel element (3) or the rear panel element (4) is attached to the outer face (10d) of the flange (10a, 10b) of the end frame member (8).

7. The housing structure (1) according to any one of the previous claims, wherein the support frame (6) is made of metal.

8. The housing structure (1) according to any one of the previous claims, wherein the front panel element (3), the rear panel element (4), and the side panel element (5) are attached to the support frame (6) by means of adhesive.

9. An electronic device (2) comprising a housing structure (1) according to any one of claims 1 to 8.

## Patentansprüche

1. Gehäusestruktur (1) für eine elektronische Vorrichtung (2), umfassend:
ein vorderes Paneelelement (3) und ein hinteres Paneelelement (4),
ein seitliches Paneelelement (5), das einen zwischen dem vorderen Paneelelement (3) und dem hinteren Paneelelement (4) gebildeten Spalt überbrückt,
einen Stützrahmen (6), der das vordere Paneelelement (3), das intere Paneelelement (4) und das seitliche Paneelelement (5) trägt, wobei der Stützrahmen (6) Folgendes umfasst:
ein mittleres Rahmenelement (7), das sich zwischen dem vorderen Paneelelement (3) und dem hinteren Paneelelement (4) erstreckt, ein Endrahmenelement (8), das an einem Rand (7a) des mittleren Rahmenelements (7) angeordnet ist,
wobei das vordere Paneelelement (3), das hintere Paneelelement (4) und das seitliche Paneelelement (5) an dem Endrahmenelement (8) befestigt sind;
wobei das vordere Paneelelement (3), das hintere Paneelelement (4) und das seitliche Paneelelement (5) aus Glas bestehen;
wobei das Endrahmenelement (8) einen Steg (9) und zwei Flansche (10a, 10b) aufweist, wobei sich der Steg (9) des Endrahmenelements (8) senkrecht zu einer Hauptebene (7c) des mittleren Rahmenelements (7) erstreckt und die Kante (7a, 7b) des mittleren Rahmenelements (7) an dem Steg (9) des Endrahmenelements (8) befestigt ist,
wobei das vordere Paneelelement (3) und das hintere Paneelelement (4) an gegenüberliegenden Flanschen (10a, 10b) des Endrahmenelements(8) befestigt sind und das seitliche Paneelelement (5) an dem Steg (9) des Endrahmenelements (8) befestigt ist;
wobei die Flansche (10a, 10b) des Endrahmenelements (8) mindestens einen paneelenförmigen Abschnitt (11a) aufweisen, der sich parallel zu dem mittleren Rahmenelement (7) und in einer Richtung von dem mittleren Rahmenelement (7) weg erstreckt, so dass der Steg (9) und die Flansche (10a, 10b) eine Nut (12) bilden, wobei das seitliche Paneelelement (5) in der Nut (12) angeordnet ist und an zwei Seiten von den Flanschen (10a, 10b) umgeben ist; wobei die Flansche (10a, 10b) des Endrahmenelements (8) über eine Außenfläche (5a) des in der Nut (12) angeordneten seitliche Paneelelements (5) in einer Richtung weg von dem mittleren Rahmenelement (7) vorstehen;
oder
wobei die Flansche (10a, 10b) des Endrahmenelements (8) mindestens einen gekrümmten Abschnitt (11b) umfassen, der an dem Steg (9) des Endrahmenelements (8) befestigt ist, wobei sich die Flansche (10a, 10b) des Endrahmenelements (8) in Richtung des mittleren Rahmenelements (7) erstrecken.

2. Gehäusestruktur (1) nach Anspruch 1, wobei der Stützrahmen (6) eine Vielzahl von Endrahmenelementen (8) umfasst, wobei die Endrahmenelemente (8) an gegenüberliegenden Kanten (7a, 7b) des mittleren Rahmenelements (7) angeordnet sind, wobei sich das mittlere Rahmenelement (7) kontinuierlich zwischen den Endrahmenelementen (8) erstreckt.

3. Gehäusestruktur (1) nach Anspruch 1 oder 2, wobei der Flansch (10a, 10b) des Endrahmenelements (8) eine Innenfläche (10c) und eine Außenfläche (10d) aufweist, wobei das vordere Paneelelement (3) und das hintere Paneelelement (4) an den Außenflächen (10d) der gegenüberliegenden Flansche (10a, 10b) des Endrahmenelements (8) befestigt sind.

4. Gehäusestruktur (1) nach Anspruch 3, wobei mindestens eines von dem vorderen Paneelelement (3) oder dem hinteren Paneelelement (4) gekrümmte Seitenabschnitte (13) aufweist und eine Kante (13a) des gekrümmten Seitenabschnitts (13) an der Außenfläche (10d) des Flansches (10a, 10b) des Endrahmenelements (8) befestigt ist.

5. Gehäusestruktur (1) nach Anspruch 3, wobei mindestens eines der vorderen Paneelelemente (3) und/oder der hinteren Paneelelemente (4) gekrümmte Seitenabschnitte (13) aufweist und eine Rückseite (13b) des gekrümmten Seitenabschnitts (13) an der Außenseite (10d) des Flansches (10a, 10b) des Endrahmenelements (8) befestigt ist.

6. Gehäusestruktur (1) nach Anspruch 3, wobei mindestens eines von dem vorderen Paneelelement (3) oder dem hinteren Paneelelement (4) plattenförmig ist und eine hintere Fläche (13b) des vorderen Paneelelements (3) oder des hinteren Paneelelements (4) an der Außenfläche (10d) des Flansches (10a, 10b) des Endrahmenelements (8) befestigt ist.

7. Gehäusestruktur (1) nach einem der vorhergehenden Ansprüche, wobei der Stützrahmen (6) aus Metall besteht.

8. Gehäusestruktur (1) nach einem der vorhergehenden Ansprüche, wobei das vordere Paneelelement (3), das hintere Paneelelement (4) und das seitliche Paneelelement (5) mittels Klebstoff an dem Stützrahmen (6) befestigt sind.

9. Elektronische Vorrichtung (2) mit einer Gehäusestruktur (1) nach einem der Ansprüche 1 bis 8.

## Revendications

1. Structure de boîtier (1) pour un dispositif électronique (2) comprenant :
un élément de panneau avant (3) et un élément de panneau arrière (4),
un élément de panneau latéral (5) comblant un espace formé entre l'élément de panneau avant (3) et l'élément de panneau arrière (4),
un cadre de support (6) supportant l'élément de panneau avant (3), l'élément de panneau arrière (4), et l'élément de panneau latéral (5), le cadre de support (6) comprenant :
un composant de cadre central (7) se prolongeant entre l'élément de panneau avant (3) et l'élément de panneau arrière (4),
un composant de cadre d'extrémité (8) disposé sur un bord (7a) du composant de cadre central (7),
dans laquelle l'élément de panneau avant (3), l'élément de panneau arrière (4) et l'élément de panneau latéral (5) sont fixés au composant de cadre d'extrémité (8) ;
dans laquelle l'élément de panneau avant (3), l'élément de panneau arrière (4) et l'élément de panneau latéral (5) sont en verre ;
dans laquelle le composant de cadre d'extrémité (8) comprend une âme (9) et deux ailes (10a, 10b), l'âme (9) du composant de cadre d'extrémité (8) se prolongeant perpendiculairement à un plan principal (7c) du composant de cadre central (7) et le bord (7a, 7b) du composant de cadre central (7) étant fixé à l'âme (9) du composant de cadre d'extrémité (8),
l'élément de panneau avant (3) et l'élément de panneau arrière (4) étant fixés à des ailes (10a, 10b) opposées du composant de cadre d'extrémité (8), l'élément de panneau latéral (5) étant fixé à l'âme (9) du composant de cadre d'extrémité (8) ;
dans laquelle les ailes (10a, 10b) du composant de cadre d'extrémité (8) comprennent au moins une section en forme de plaque (11a) qui se prolonge parallèlement au composant de cadre central (7) et dans une direction s'éloignant du composant de cadre central (7) de sorte que l'âme (9) et les ailes (10a, 10b) forment une rainure (12), l'élément de panneau latéral (5) étant disposé dans la rainure (12), entouré des deux côtés par les ailes (10a, 10b) ; dans laquelle les ailes (10a, 10b) du composant de cadre d'extrémité (8) font saillie au-delà d'une face extérieure (5a) de l'élément de panneau latéral (5), disposé dans la rainure (12), dans une direction s'éloignant du composant de cadre central (7) ;
ou
dans laquelle les ailes (10a, 10b) du composant de cadre d'extrémité (8) comprennent au moins une section incurvée (11b), fixée à l'âme (9) du composant de cadre d'extrémité (8), les ailes (10a, 10b) du composant de cadre d'extrémité (8) se prolongeant dans une direction vers le composant de cadre central (7).

2. Structure de boîtier (1) selon la revendication 1, dans laquelle le cadre de support (6) comprend une pluralité de composants de cadre d'extrémité (8), les composants de cadre d'extrémité (8) étant disposés au niveau de bords (7a, 7b) opposés du composant de cadre central (7), le composant de cadre central (7) se prolongeant de manière continue entre les composants de cadre d'extrémité (8).

3. Structure de boîtier (1) selon la revendication 1 ou 2, dans laquelle l'aile (10a, 10b) du composant de cadre d'extrémité (8) présente une face intérieure (10c) et une face extérieure (10d), l'élément de panneau avant (3) et l'élément de panneau arrière (4) étant fixés aux faces extérieures (10d) d'ailes (10a, 10b) opposées du composant de cadre d'extrémité (8).

4. Structure de boîtier (1) selon la revendication 3, dans laquelle au moins l'un de l'élément de panneau avant (3) ou de l'élément de panneau arrière (4) présente des sections latérales incurvées (13), et un bord (13a) de la section latérale incurvée (13) est fixé à la face extérieure (10d) de l'aile (10a, 10b) du composant de cadre d'extrémité (8).

5. Structure de boîtier (1) selon la revendication 3, dans laquelle au moins l'un de l'élément de panneau avant (3) ou de l'élément de panneau arrière (4) présente des sections latérales incurvées (13), et une face arrière (13b) de la section latérale incurvée (13) est fixée à la face extérieure (10d) de l'aile (10a, 10b) du composant de cadre d'extrémité (8).

6. Structure de boîtier (1) selon la revendication 3, dans laquelle au moins l'un de l'élément de panneau avant (3) ou de l'élément de panneau arrière (4) est en forme de plaque, et une face arrière (13b) de l'élément de panneau avant (3) ou de l'élément de panneau arrière (4) est fixée à la face extérieure (10d) de l'aile (10a, 10b) du composant de cadre d'extrémité (8).

7. Structure de boîtier (1) selon l'une quelconque des revendications précédentes, dans laquelle le cadre de support (6) est en métal.

8. Structure de boîtier (1) selon l'une quelconque des revendications précédentes, dans laquelle l'élément de panneau avant (3), l'élément de panneau arrière (4) et l'élément de panneau latéral (5) sont fixés au cadre de support (6) au moyen d'un adhésif.

9. Dispositif électronique (2) comprenant une structure de boîtier (1) selon l'une quelconque des revendications 1 à 8.
